# EUROPEAN PATENT APPLICATION

(11) **EP 4 844 713 A1**
(43) Date of publication of application: **25.11.2026**
(21) Application number: 26165941.1
(22) Date of filing: 19.03.2026
(51) Int. Cl.: G07C 5/08, G07C 5/00, H04W 4/44

(54) **SYSTEM, METHOD AND AT LEAST ONE CLOUD SERVICE SERVER FOR REMOTE VEHICLE DIAGNOSIS**

(30) Priority: 20.05.2025 DE 102025119543
(71) Applicant: MAHLE International GmbH, 70376 Stuttgart (DE)
(72) Inventor: Scaramuzza, Tiberio, 43012 Parma (IT); Triani, Giuseppe, 43122 Parma (IT)

(57) **Abstract**

System for remote vehicle diagnosis comprising:
• A workshop device (TechPro) being connected to a first wireless network being connected to the Internet for initiating a remote diagnosis for a vehicle (V) by sending a request to at least one cloud service server (RDS) over the first wireless network and the Internet,
• A first communication device (VCI-W) being connectable to the vehicle (V) and being connectable to the first wireless network, the first communication device (VCI-W) being connected to the at least one cloud service server (MRS) depending on the request,
• A second communication device (VCI-R) being connectable to a vehicle scan tool (SCAN) and being connectable to a second wireless network being connected to the Internet, the second communication device (VCI-R) being connected to the at least one cloud service server (MRS) depending on the request,
• The at least one cloud service server (MRS) establishing a TCP connection between the first communication device (VCI-W) and the second communication device (VCR) for exchanging data for the remote diagnosis and terminating the TCP connection depending on the remote diagnosis.

## Description

The invention relates to a system and a method for remote vehicle diagnosis according to the independent claims.

The document EP 2 656 200 B1 discloses a system and method for remotely programming vehicle sub-systems using an OBD connector, a vehicle communication device, and a remote communication device. This allows technicians to access and modify vehicle settings and functionalities from a remote location, enhancing efficiency and safety in vehicle maintenance. The system utilizes a bi-directional communication link over the Internet, enabling the transmission of data packets containing vehicle signals and programming instructions. By eliminating the need for technicians to be physically present near the vehicle, the system addresses the limitations of traditional scan tools, which often require proximity for operation. Furthermore, it supports a wide range of vehicle sub-systems, ensuring comprehensive programming capabilities across various vehicle makers and models, while also providing access to the latest software updates remotely.

A system and a method for remote vehicle diagnosis with the features of the independent claims is proposed.

The System for remote vehicle diagnosis comprises:
- A workshop device being connected to a first wireless network being connected to the Internet for initiating a remote diagnosis for a vehicle by sending a request to at least one cloud service server over the first wireless network and the Internet,
- A first communication device being connectable to the vehicle and being connectable to the first wireless network, the first communication device being connected to the at least one cloud service server depending on the request,
- A second communication device being connectable to a vehicle scan tool and being connectable to a second wireless network being connected to the Internet, the second communication device being connected to the at least one cloud service server depending on the request,
- The at least one cloud service server establishing a TCP connection between the first communication device and the second communication device for exchanging data for the remote diagnosis and terminating the TCP connection depending on the remote diagnosis.

The method for operating a system for remote vehicle diagnosis comprises:
- A workshop device being connected to a first wireless network being connected to the Internet for initiating a remote diagnosis for a vehicle by sending a request to at least one cloud service server over the first wireless network and the Internet,
- A first communication device being connectable to the vehicle and being connectable to the first wireless network, the first communication device being connected to the at least one cloud service server depending on the request,
- A second communication device being connectable to a vehicle scan tool and being connectable to a second wireless network being connected to the Internet, the second communication device being connected to the at least one cloud service server depending on the request,
- The at least one cloud service server establishing a TCP connection between the first communication device and the second communication device for exchanging data for the remote diagnosis and terminating the TCP connection depending on the remote diagnosis.

The advantage of the proposed system and method is that at least one cloud service server is used for facilitating the remote diagnosis offering possibilities of controlling the remote diagnosis more efficiently and more flexible.

The workshop device could be a handheld device like a tablet computer.

The first communication device could be a device that enables a data exchange between the vehicle and remote diagnostics.

According to the dependent claims improvements and further embodiments of the system and the method according to the independent claims are possible.

According to one aspect of the invention it is proposed that the workshop device checks whether the first communication device is turned on and connected to the vehicle.

According to one aspect of the invention it is proposed that the first communication device is connected to the vehicle by being plugged into an onboard interface.

According to one aspect of the invention it is proposed that the first communication device is registered with the at least one cloud service server using a client-server protocol using a publish-subscribe model.

According to one aspect of the invention it is proposed that the client-server protocol is the MQTT protocol. MQTT (originally an initialism of MQ Telemetry Transport) is a lightweight, publish-subscribe, machine-to-machine network protocol for message queue/message queuing service. It is designed for connections with remote locations that have devices with resource constraints or limited network bandwidth, such as in the Internet of things (IoT). It must run over a transport protocol that provides ordered, lossless, bi-directional connections-typically, TCP/IP. It is an open OASIS standard and an ISO recommendation (ISO/IEC 20922).

According to one aspect of the invention it is proposed that wherein a first cloud service server is configured for establishing the TCP connection and a second cloud service server is configured for receiving the request and opening a ticket with a remote diagnostic center being connectable to the vehicle scan tool. Using such a configuration, it is possible that the first cloud server is operated by a first company and the second cloud server by a second company. Alternatively, both servers can be operated by one company. Initially, a person in a workshop can use the workshop device to send a request, for example a ticket, to the second cloud service server. This ticket is then sent to the remote diagnostic center at a remote location which could also be the location of the vehicle scan tool and the second communication device. Alternatively, the vehicle scan tool and the second communication device can be operated at another remote location.

It could be that the vehicle type which defines at least the manufacturer or the model defines also the type of scan tool. So either automatically or manually a suitable vehicle scan tool is selected. The different vehicle scan tools could be different hardware and/or software. It is an advantage to provide the different scan tools for different vehicle types remotely, so that a workshop does not need to provide them also which would be a big investment.

According to one aspect of the invention, it is proposed that the first and the second cloud service servers are configured to exchange data on a vehicle type being sent with the request. By receiving this data the first could service server is able to configure the data transmission between the first and the second communication device accordingly.

According to another aspect of the invention, it is proposed that the first cloud service server loads communication settings depending on the vehicle type and sends them to the first and the second communication device respectively. The communication settings which are defined further below can loaded from a database which is accessible for the first could service server and for example regularly updated, so that always the actual communication settings can be employed.

According to another aspect of the invention, it is proposed that the communication settings comprise a CAN configuration of the vehicle type. Since a vehicle scan tool is configured to analyze the data traffic on a CAN bus in the vehicle, it is beneficial to use the predefined CAN configuration for a certain vehicle type. A CAN is a widely used bus technology in the vehicle industry. It is a multi-master bus technology.

According to another aspect of the invention, it is proposed that the CAN configuration comprises a CAN bit rate type and a CAN type and a usage of PINs of the first and second communication device and a CAN filtering mask and a CAN address length. These typical CAN parameters define the CAN configuration. These parameters are defined below. PINs are short leads of an electrical connector which is for example a so called OBD connector which is connected with the first communication device. Not every PIN is necessarily with a signal or with the same signal. This can vary from vehicle type to vehicle type. Therefore, it is beneficial to use this information in the CAN configuration for setting up the communication.

According to another aspect of the invention, it is proposed that the CAN bit rate type is 1 Mbit or 500 kBit or 125 kBit.

According to another aspect of the invention, it is proposed that the CAN type is High or Low speed.

According to another aspect of the invention, it is proposed that the usage of PINs comprises a respective presence of a signal on a respective PIN.

According to another aspect of the invention, it is proposed that the CAN filtering mask is configured to pass a range of CAN messages depending on a respective identification number of a respective CAN message. In this way, it is possible to send only the relevant CAN messages to the second communication device for analyzing which is economical in using bandwidth and processing time. It is possible to define the CAN filter such that a range of identification numbers can be passed through this CAN filtering mask.

According to another aspect of the invention, it is proposed that the CAN address length is 11 or 29 bit.

According to another aspect of the invention, it is proposed that the first communication device is configured to send a busy signal to the second communication device depending on a signal received from the vehicle. This is an advantageous idea because a scan tool could show a short timeout meaning that if no new data is received by the scan tool, it will switch off or go in an idle mode. To avoid this behavior, it is proposed that the first communication device sends instead of a CAN message a busy signal to keep the communication to the scan tool over TCP open. This measure could used if either no CAN messages could be sent or if the latency of the communication would be to long. The busy signal signifies that an ECU has got higher priorities to work on and is therefore unable to send the CAN messages in time.

According to one aspect of the invention it is proposed that the at least one cloud service server receives at least one vehicle identification from the first communication device and depending on the at least one vehicle identification loads communication settings and sends them to the first and the second communication device respectively.

According to one aspect of the invention it is proposed that the at least one cloud service server informs the first and the second communication devices about a TCP port to be used.

The Transmission Control Protocol provides a communication service at an intermediate level between an application program and the Internet Protocol. It provides host-to-host connectivity at the transport layer of the Internet model. An application does not need to know the particular mechanisms for sending data via a link to another host, such as the required IP fragmentation to accommodate the maximum transmission unit of the transmission medium. At the transport layer, TCP handles all handshaking and transmission details and presents an abstraction of the network connection to the application typically through a network socket interface.

At the lower levels of the protocol stack, due to network congestion, traffic load balancing, or unpredictable network behavior, IP packets may be lost, duplicated, or delivered out of order. TCP detects these problems, requests re-transmission of lost data, rearranges out-of-order data and even helps minimize network congestion to reduce the occurrence of the other problems. If the data still remains undelivered, the source is notified of this failure. Once the TCP receiver has reassembled the sequence of octets originally transmitted, it passes them to the receiving application. Thus, TCP abstracts the application's communication from the underlying networking details.

TCP is used extensively by many internet applications, including the World Wide Web (WWW), email, File Transfer Protocol, Secure Shell, peer-to-peer file sharing, and streaming media.

TCP is optimized for accurate delivery rather than timely delivery and can incur relatively long delays (on the order of seconds) while waiting for out-of-order messages or re-transmissions of lost messages. Therefore, it is not particularly suitable for real-time applications such as voice over IP. For such applications, protocols like the Real-time Transport Protocol (RTP) operating over the User Datagram Protocol (UDP) are usually recommended instead.

TCP is a reliable byte stream delivery service that guarantees that all bytes received will be identical and in the same order as those sent. Since packet transfer by many networks is not reliable, TCP achieves this using a technique known as positive acknowledgment with re-transmission. This requires the receiver to respond with an acknowledgment message as it receives the data. The sender keeps a record of each packet it sends and maintains a timer from when the packet was sent. The sender re-transmits a packet if the timer expires before receiving the acknowledgment. The timer is needed in case a packet gets lost or corrupted.

While IP handles actual delivery of the data, TCP keeps track of segments - the individual units of data transmission that a message is divided into for efficient routing through the network. For example, when an HTML file is sent from a web server, the TCP software layer of that server divides the file into segments and forwards them individually to the internet layer in the network stack. The internet layer software encapsulates each TCP segment into an IP packet by adding a header that includes (among other data) the destination IP address. When the client program on the destination computer receives them, the TCP software in the transport layer reassembles the segments and ensures they are correctly ordered and error-free as it streams the file contents to the receiving application.

According to another aspect of the invention a cloud service server is proposed. It is possible that a plurality of the servers is employed for the cloud service.

Examples of the invention are shown in the drawing and explained in the specification below.
Fig. 1 shows the system according to this patent application as a block diagram,
Fig. 2 shows a first example screen on the workshop device,
Fig. 3 shows a second example screen on the workshop device,
Fig. 4 shows a first flowchart depicting a method according to this invention, and
Fig. 5 shows a second flowchart depicting the method according to this invention.

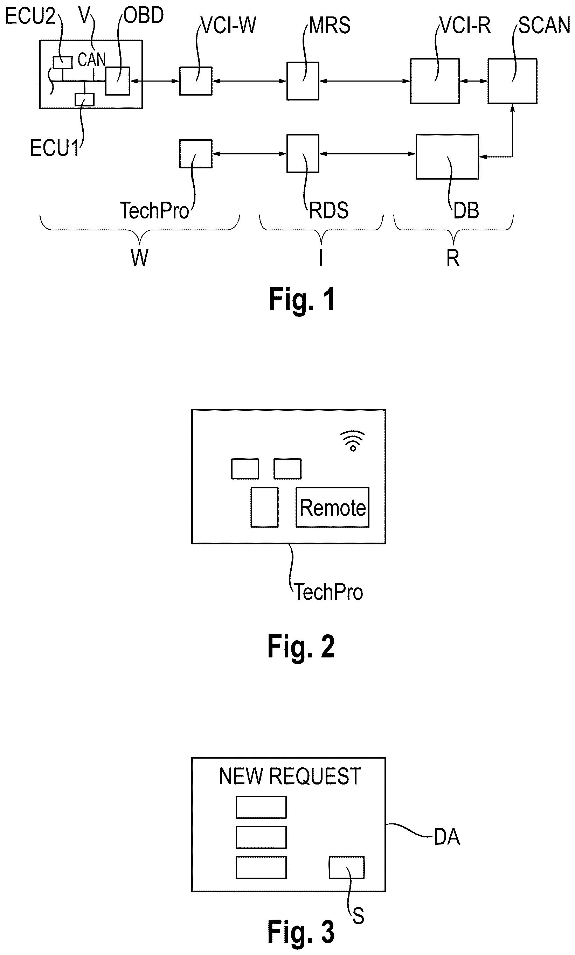

Fig. 1 shows a system according to this invention. The system is divided into three parts: the workshop W, the internet I, and the remote location R.

In the workshop W a vehicle V is placed for inspection. Esp. an automated analysis of the data flowing in the vehicle V is desirable for identifying a malfunctioning of the vehicle V. This analysis could also support an early identification of an upcoming malfunctioning of the vehicle V, for example due to the deterioration of a component such as a sensor in the vehicle V. This analysis could be performed by a scan tool SCAN. Since for different vehicles different scan tools SCAN may be necessary, it would be a huge investment for a workshop W to provide all necessary scan tools SCAN for all possible vehicles V. Therefore, it is beneficial to provide the availability of such scan tools SCAN at a remote location R and the scan tools SCAN can be accessed via the internet I or any other data connection.

An automotive scan SCAN tool or scanner is an electronic tool used to interface with, diagnose and, sometimes, reprogram vehicle control units. The scan tool is connected to the vehicle's data link connector and, depending on the particular tool, may only read out diagnostic trouble codes or diagnostic trouble codes (this would be considered a "code reader") or may have more capabilities. Actual scan tools will display live data stream (inputs and outputs), have bi-directional controls (the ability to make the controllers do things outside of normal operations) and may even be able to calibrate/program modules within certain parameters.

A workshop device TechPro is used by a person in the workshop W. This workshop device TechPro is for example a tablet computer with software on it enabling an easy operation. The workshop device TechPro may have a touch-sensitive screen for easily selecting functions and inputting data. Alternatively, the workshop device TechPro may exhibit pushbuttons or other input devices. The workshop device TechPro could be connected wirelessly with the internet I and also with the vehicle V. This data connection could also be achieved by cables, e.g. LAN- or Ethernet cables.

A first communication device VCI-W is also connected with the vehicle either mechanically or wirelessly. The purpose of the first communication device VCI-W is to transmit data to and from the vehicle V. The data transmission is then also over the internet I. The first communication device VCI-W could comprise a Wi-Fi-module for connecting the first communication device VCI-W to a Wi-Fi network enabling the connection to the internet I because a Wi-Fi connected is connected to the internet I, either using a data connection to cable based communication network or using a mobile phone connection. A Wi-Fi network is a wireless network based on the IEEE 802.11 family of standards. There could also be modules for connecting to an Ethernet, to one or more CAN busses or other transmission technologies. The first communication device VCI-W could be designed such that it fits to an OBD connector which is a component of the vehicle V. The first communication device VCI-W is configured to manage the transmission of communication frames between a control unit ECU1, 2 in the vehicle V and the scan tool SCAN. The configuration of the first vehicle communication device VCI-W involves various parameters:
- PINs on the OBD connector: Some vehicle makers use PIN pairs 6-14, other use other PIN pairs. Therefore, the first communication device VCI-W needs to be configured to be adapted to this usage of PIN pairs.
- CAN filtering mask: In some vehicle types all frame traffic is transmitted between the different control units ECU1, 2 on the CAN bus. To limit the transmission to only those frames involved in the remote diagnosis, a filter is set to pass only those frames. This is achieved by using certain identifiers in a certain frame, e.g. an address.
- Busy response management: A scan tool SCAN could show a very short timeout, e.g. a few tens of milliseconds. If the response from the control units ECU1, 2 does not arrive before the timeout expires, the session i.e. the communication is interrupted by the scan tool SCAN. This could happen if a delay caused by the communication exceeds the timeout. To avoid this effect, a function could be implemented in the first communication device VCI-W. This function causes a response with a busy command to the scan tool SCAN that the desired response is not ready as the control unit ECU1, 2 is busy with other priority tasks. So the communication with the scan tool SCAN is kept active.

The vehicle V comprises the OBD connector OBD connecting the first communication device VCI-W to the CAN bus CAN of the vehicle V. As an example, two control units ECU1 and ECU2 are connected to the CAN bus via CAN bus controllers. The two control units ECU1 and ECU2 transmit and receive data in CAN frames.

A user uses the workshop device TechPro to create a ticket for a remote diagnosis service for the vehicle V, because the user wants to use the scan tool SCAN which is situated at the remote location R. Also, the operation of the scan tool SCAN by a service expert at this or another remote location could be booked also. It is possible that the user uses the remote scan tool SCAN him- or herself by controlling it via internet I.

In the internet section I of Fig. 1, a first cloud service server MRS and a second cloud service server RDS are provided. The two servers MRS and RDS are configured to exchange data with each other. A server is a computer providing data to other computers connected to a network.

The workshop device TechPro is connected to the second cloud service server RDS to send a request for creating a ticket. The request includes a vehicle type. The vehicle type determines which scan tool SCAN is to be used and how the communication and the analysis parameters are to be set.

As an example, the call of the remote service performed by the workshop device TechPro can comprise four API. An API is an application programming interface for a connection between computers or computer programs:
1. API 1 creation workorder: Open workorder or ticket on a web portal of a remote operator on a dashboard DB.
2. API 2 configuration of the communication devices VCI-W, VCI-R. A user in the workshop W uses the workshop device TechPro to send a vehicle identification to the first server MRS over the second server RDS. Then, the first server MRS loads the configuration for the communication devices VCI-W, VCI-R depending on the vehicle identification and sends this configuration to the communication devices VCI-W, VCI-R. MQTT is used for the sending of the configuration.
3. API 3 support center: The dashboard DB uses a third API to manage a binding procedure between the communication devices VCI-W, VCI-R. Also the start of the diagnostic session after the successful binding and a monitoring of the communication devices VCI-W, VCI-R are performed using this third API.
4. API 4 monitoring: A fourth API is used for monitoring the communication devices VCI-W, VCI-R, checking of logs and statistics.

The ticket is then managed by a dashboard DB, so that an availability at a certain time slot is allocated to the ticket. The dashboard DB is part of the remote diagnostic center at the remote location R. For this, the dashboard is connected directly or indirectly to the desired scan tool SCAN, so that this scan tool SCAN is then connected to the internet I for remote diagnosis. The ticket or work order gets a unique identifier.

For the remote diagnosis a data connection using TCP between the first and the second communication device VCI-W and VCI-R is necessary. The second communication device VCI-R could be identical to the first communication device VCI-W and is connected to the scan tool SCAN either wirelessly or mechanically. For this data connection a binding process between the first and the second communication device VCI-W and VCI-R is necessary. Therefore, the first and second communication devices VCI-W and VCI-R are using their Wi-Fi module for connecting to the internet I. The server MRS provides the MQTT protocol to which both communication devices subscribe and then checks whether if all relevant parameters of both communication devices VCI-W and VCI-R are in predefined ranges such as Wi-Fi strength, vehicle voltages etc.

Then, the server MRS assigns a TCP port for the binding of the communication devices VCI-W and VCI-R. The tunneling between them can be established.

After that, the server MRS sends out specific connection parameters for starting the diagnostic session. Sometimes, the data is too big or there is a delay in the communication, then the first communication device VCI-R can send out a busy signal to maintain the data connection between the two communication devices. The remote diagnostic session consists of a transmission of CAN messages e.g. in frames from the vehicle V to the scan tool SCAN. However, this transmission does not need to be unidirectional. The scan tool can also send requests or even start to change or update code of the respective control unit ECU1, 2.

The diagnostic session can be terminated manually for example by the service expert who is at a remote location or by the user in the workshop or automatically by the scan tool SCAN if for example all checks have been performed.

If a CAN configuration sent to the communication devices VCI-W, VCI-R causes problems, it could be beneficial to send a different CAN configuration.

Fig. 2 shows a first example screen on the workshop device TechPro. Apart from various electronically generated switches, buttons, symbols etc, there is a remote button which the user can touch for selecting the remote diagnosis session. The touching needs to be for a certain time or several times for selecting it. Also, the user needs to select the vehicle type, so that the correct parameters are used for the remote diagnosis session.

Fig. 3 shows a second example screen on the workshop device TechPro. It shows the page to open a new ticket, if the user touches the field S which stands for submit.

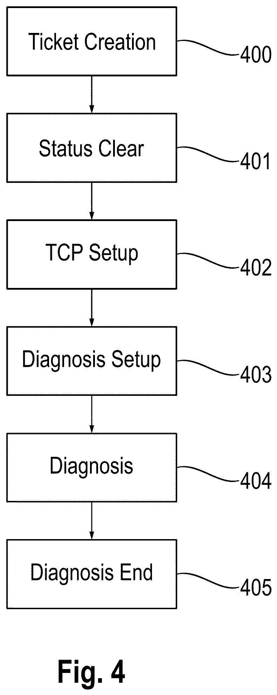

Fig. 4 shows a first flowchart of the method according to this invention. In step 400, the user creates the ticket by sending a request to the server RDS as described above. For the sending of the request, the workshop device TechPro uses a so called application interface (API). This API sends a workorder identification as a unique identifier of the ticket. The two communication devices VCI-W and VCI-R switch to their respective Wi-Fi connection to get connection to the internet I. Via the MQTT protocol, they subscribe to the cloud service on the server MRS.

In step 401, a status of both the communication devices VCI-W, VCI-R is checked. This is performed using MQTT to check whether all parameters of the communication devices VCI-W, VCI-R are in predefined ranges. Such parameters are for example the strength of the respective Wi-Fi, car voltage levels etc. If this check is positive, the system proceeds with the next step 402.

In step 402, a TCP network setup is performed. The server MRS assigns a TCP/IP port for the binding of the communication devices VCI-W, VCI-R. The tunneling of this TCP data connection between the communication devices VCI-W, VCI-R can be enabled. Another API is used here.

In step 403, a diagnosis setup is performed. The server MRS uses MQTT to send connection parameters to the communication devices VCI-W, VCI-W for the remote diagnosis.

In step 404, the remote diagnosis is performed by evaluating data sent by the first communication device VCI-W over the TCP tunnel to the second communication device VCI-R. The evaluation is performed by the scan tool SCAN. The data comprises CAN messages sent over the CAN bus in the vehicle under test. This data does not contain any identification data of the communication devices VCI-W, VCI-R or of the unique identifier.

In step 405, the remote diagnosis ends if the scan tool SCAN has completed its test procedure and if needed any repair or update measures. A report on the diagnosis result is sent to the workshop, preferably to the workshop device TechPro.

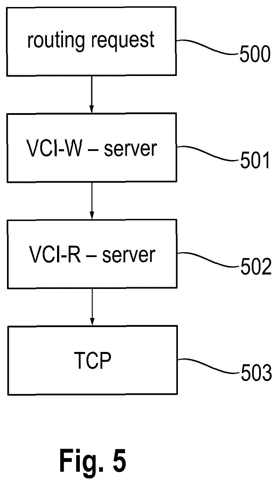

In Fig. 5, a second flowchart of the method according to this invention is shown. In step 500, the user in the workshop W starts the remote diagnosis by using the workshop device TechPro as described above.

In step 501, a request to enable the connection of the first communication device VCI-W to vehicle V is sent out. When the first communication device VCI-W is connected either manually or wirelessly and starts up, the first communication device VCI-W is enabling its Wi-Fi module and connects to the server MRS until a disable command is sent out. The server MRS sends configuration data to the first communication device VCI-W for the data transfer.

In step 502, the second communication device VCI-R is connected to the server MRS. It could be that the second communication device VCI-R is connected to the scan tool and now the connection to the server MRS and the binding process with the first communication device VCI-W is taking place.

In step 503, the TCP data connection is established as described above.

### Reference numerals:

- TechPro: workshop device
- W: workshop
- I: internet
- R: remote location
- VCI-W: first communication device
- VCI-R: second communication device
- VIN: vehicle identification
- V: vehicle
- ECUx: control unit
- CAN: Controller Area Network
- OBD: onboard diagnostics
- MRS: first server
- RDS: second server
- SCAN: scan tool
- DB: dashboard
- S: field
- 400-405: method steps
- 500-503: method steps

## Claims

1. System for remote vehicle diagnosis comprising:
• A workshop device (TechPro) being connected to a first wireless network being connected to the Internet for initiating a remote diagnosis for a vehicle (V) by sending a request to at least one cloud service server (RDS) over the first wireless network and the Internet,
• A first communication device (VCI-W) being connectable to the vehicle (V) and being connectable to the first wireless network, the first communication device being connected to the at least one cloud service server (MRS) depending on the request,
• A second communication device (VCI-R) being connectable to a vehicle scan tool (SCAN) and being connectable to a second wireless network being connected to the Internet, the second communication device (VCI-R) being connected to the at least one cloud service server (MRS) depending on the request,
• The at least one cloud service server (MRS) establishing a TCP connection between the first communication device (VCI-W) and the second communication device (VCI-R) for exchanging data for the remote diagnosis and terminating the TCP connection depending on the remote diagnosis.

2. System according to claim 1, wherein the workshop device (TechPro) checks whether the first communication device (VCI-W) is turned on and connected to the vehicle (V).

3. System according to claim 2, wherein the first communication device (VCI-W) is connected to the vehicle (V) by being plugged into an onboard interface (OBD).

4. System according to one of the preceding claims, wherein the first communication device (VCI-W) is registered with the at least one cloud service server (MRS) using a client-server protocol using a publish-subscribe model.

5. System according to claim 4, wherein the client-server protocol is the MQTT protocol.

6. System according to one of the preceding claims, wherein a first cloud service server (MRS) is configured for establishing the TCP connection and a second cloud service (RDS) server is configured for receiving the request and opening a ticket with a remote diagnostic center (DB) being connectable to the vehicle scan tool (SCAN).

7. System according to claim 6, wherein the first and the second cloud service servers (MRS, RDS) are configured to exchange data on a vehicle type being sent with the request.

8. System according to claim 7, wherein the first cloud service server (MRS) loads communication settings depending on the vehicle type and sends them to the first and the second communication device (VCI-W, VCI-R) respectively.

9. System according to claim 8, wherein the communication settings comprise a CAN configuration of the vehicle type.

10. System according to claim 9, wherein the CAN configuration comprises a CAN bit rate type and a CAN type and a usage of PINs of the first and second communication device (VCI-W, VCI-R) and a CAN filtering mask and a CAN address length.

11. System according to claim 10, wherein the CAN bit rate type is 1 Mbit or 500 kBit or 125 kBit.

12. System according to claim 10 or 11, wherein the CAN type is High or Low speed.

13. System according to claim 10, 11, or 12, wherein the usage of PINs comprises a respective presence of a signal on a respective PIN.

14. System according to one of the claims 10-13, wherein the CAN filtering mask is configured to pass a range of CAN messages depending on a respective identification number of a respective CAN message.

15. System according to one of the claims 10-14, wherein the CAN address length is 11 or 29 bit.

16. System according to one of the preceding claims, wherein the first communication device (VCI-W) is configured to send a busy signal to the second communication device (VCI-R) depending on a signal received from the vehicle.

17. System according to one of the preceding claims, wherein the at least one cloud service server informs the first and the second communication devices (VCI-W, VCI-R) about the TCP port to be used.

18. Method for operating a system for remote vehicle diagnosis comprising:
• A workshop device (TechPro) being connected to a first wireless network being connected to the Internet for initiating a remote diagnosis for a vehicle (V) by sending a request to at least one cloud service server (RDS) over the first wireless network and the Internet,
• A first communication device (VCI-W) being connectable to the vehicle (V) and being connectable to the first wireless network, the first communication device (VC-W) being connected to the at least one cloud service server (MRS) depending on the request,
• A second communication device (VCI-R) being connectable to a vehicle scan tool (SCAN) and being connectable to a second wireless network being connected to the Internet, the second communication device (VCI-R) being connected to the at least one cloud service server (MRS) depending on the request,
• The at least one cloud service server establishing a TCP connection between the first communication device (VCI-W) and the second communication device (VCR) for exchanging data for the remote diagnosis and terminating the TCP connection depending on the remote diagnosis.

19. Cloud service server according to one of the preceding claims.
